Europäisches Patentamt

European Patent Office

Office européen des brevets

(19)

(11) **EP 0 709 980 B1**

(12) **FASCICULE DE BREVET EUROPEEN**

(45) Date de publication et mention
de la délivrance du brevet:
**31.07.2002 Bulletin 2002/31**

(51) Int Cl.7: **H04L 5/06**

(21) Numéro de dépôt: **95202787.8**

(22) Date de dépôt: **16.10.1995**

(54) **Sychronisation de fréquence pour système MDFO**

Frequenzsynchronisierung für OFDM-System

Frequency synchronisation for OFDM system

(84) Etats contractants désignés:
**DE FR GB IT**

(30) Priorité: **26.10.1994 FR 9412823**

(43) Date de publication de la demande:
**01.05.1996 Bulletin 1996/18**

(73) Titulaire: **Koninklijke Philips Electronics N.V.**
**5621 BA Eindhoven (NL)**

(72) Inventeurs:
• **Daffara, Flavio, Société Civile S.P.I.D.**
**F-75008 Paris (FR)**
• **Adami, Ottavio, Société Civile S.P.I.D.**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 0 365 431      EP-A- 0 453 203**
**WO-A-92/10043**

• **PROCEEDINGS OF THE INTERNATIONAL**
**CONFERENCE ON COMMUNICATIONS (ICC),**
**GENEVA, MAY 23 - 26, 1993, vol. 1 - 2 - 03, 23 Mai**
**1993 INSTITUTE OF ELECTRICAL AND**
**ELECTRONICS ENGINEERS, pages 766-771, XP**
**000371188 FLAVIO DAFFARA ET AL 'MAXIMUM**
**LIKELIHOOD FREQUENCY DETECTORS FOR**
**ORTHOGONAL MULTICARRIER SYSTEMS'**

EP 0 709 980 B1

## Description

L'invention concerne un système de transmission de données comprenant un émetteur et un récepteur reliés entre eux, l'émetteur comportant des moyens pour convertir des premiers signaux du domaine fréquentiel en des seconds signaux du domaine temporel, les seconds signaux à émettre comportant des données utiles et des données redondantes dupliquant des données utiles, le récepteur comprenant des moyens pour convertir inversement, du domaine temporel vers le domaine fréquentiel, les seconds signaux en provenance de l'émetteur, le récepteur comprenant, en outre, un dispositif de synchronisation muni d'un oscillateur pour générer une porteuse locale, le dispositif de synchronisation délivrant un signal de correction pour synchroniser la porteuse locale. L'invention concerne également un récepteur mis en oeuvre dans un tel système.

Un tel système et un tel récepteur ont des applications pour la réception de signaux, émis par exemple selon une répartition multiplexée de fréquences orthogonales, transmis notamment par voie hertzienne, par câble, par satellite, par exemple pour des applications en télévision numérique.

Les signaux émis selon une répartition multiplexée de fréquences orthogonales seront par la suite identifiés par l'appellation simplifiée OFDM (qui en langue anglaise signifie Orthogonal Frequency Division Multiplexing). La technique OFDM consiste à fractionner une information à transmettre en la répartissant sur un grand nombre de canaux élémentaires à bas débit. On transforme ainsi un canal à large bande fortement sélectif en un grand nombre de canaux élémentaires non sélectifs. Comme l'ensemble constitue un canal à large bande, il est peu probable que des évanouissements en cours de transmission affectent simultanément la totalité du canal. Cette technique permet également de réduire les brouillages intersymboles.

A chaque canal élémentaire correspond alors une fréquence, l'ensemble des fréquences étant symétriquement réparti autour d'une fréquence porteuse centrale. Comme à la réception il est difficilement acceptable d'utiliser des filtres sélectifs, on préfère tolérer un recouvrement des spectres mais en imposant des conditions d'orthogonalité entre les fréquences pour éliminer l'interférence intersymbole aux instants d'échantillonnage. L'ensemble du spectre d'un signal OFDM tend ainsi vers un spectre rectangulaire.

Pour éviter des problèmes de recouvrement de spectre à la réception, dû à l'échantillonnage du signal reçu, on ne transmet pas les porteuses latérales situées aux extrémités gauche et droite du spectre de fréquences. De plus, le filtrage à la réception peut être réalisé avec des fronts moins raides.

A la réception, les signaux reçus doivent être démodulés puis décodés pour restituer les informations d'origine. Cette démodulation met en oeuvre un oscillateur local dont la fréquence doit être asservie à la fréquence d'émission à l'aide d'un signal de correction de synchronisation. La synchronisation de porteuse est une fonction fondamentale des systèmes de transmission OFDM. En fait, une erreur de fréquence à la réception conduit à une perte d'orthogonalité entre les différentes sous-porteuses formant le signal OFDM et entraîne une dégradation des performances globales du système.

On connaît le document EP 580 216 qui décrit un système et un récepteur de signaux à répartition multiplexée de fréquences orthogonales. Ce document enseigne d'effectuer la synchronisation de la porteuse locale générée dans le récepteur en prélevant en sortie du démodulateur des données relatives à chacune des sous-porteuses c'est-à-dire dans le domaine fréquentiel. Pour cela, on calcule les énergies des signaux correspondant à chaque sous-porteuse. Or, pour les signaux concernés, il existe une répartition symétrique des sous-porteuses par rapport à une porteuse centrale, et de plus certaines sous-porteuses ne doivent pas normalement porter de signal, donc d'énergie. Ce document met ainsi à profit cette répartition symétrique et cette absence d'énergie sur certaines sous-porteuses extrêmes pour en déduire un signal de correction qui est utilisé pour corriger l'oscillateur local. Cette solution nécessite peu de moyens matériels mais présente l'inconvénient de fournir des résultats insuffisants dans le cas d'une propagation par trajets multiples ce qui est souvent le cas pour des applications en radio mobile.

Le but principal de l'invention est donc d'étendre les possibilités de synchronisation de porteuse à des canaux perturbés comme ceux présentant des trajets multiples. Ceci doit être obtenu sans compliquer les moyens matériels pour disposer d'un coût peu élevé pour des applications notamment Grand Public par exemple en télévision numérique.

Ce but est atteint avec un récepteur et un système de transmission du type décrit dans le préambule pour lesquels le dispositif de synchronisation comporte des moyens de détection de fréquence pour mesurer une différence entre au moins une donnée utile et la donnée redondante correspondante et pour en déduire ledit signal de correction.

Préférentiellement, l'invention se rapporte à des signaux au format OFDM pour lesquels la redondance des données est assurée par l'insertion d'un intervalle de garde qui duplique certaines données. Le rôle de l'intervalle de garde est de permettre l'élimination des interférences intersymboles.

Les avantages suivants sont obtenus grâce à l'invention :

- simplicité et faible complexité du traitement et des moyens matériels nécessaires,
- acquisition très rapide de la synchronisation,
- très bonne estimation de fréquence. Dans le cas de canaux multitrajet, l'estimation de fréquence est parfaitement non biaisée,

- insensibilité aux erreurs de phase de l'horloge d'échantillonnage,
- robustesse aux erreurs de fréquence de l'horloge d'échantillonnage.

La combinaison peut consister à délivrer un signal de correction constitué par une composante imaginaire d'un signal résultant soit d'un produit de la donnée utile par le conjugué de la donnée redondante correspondante soit d'un produit du conjugué de la donnée utile par la donnée redondante correspondante. La composante imaginaire peut être mesurée sur un seul couple de données ou former une moyenne établie sur plusieurs couples de données.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : un schéma bloc d'un système émetteur-récepteur de signaux numériques.
Figure 2 : un schéma d'un modulateur de signaux OFDM.
Figure 3 : un schéma d'une partie d'un récepteur muni d'un dispositif de synchronisation connu.
Figure 4 : un schéma d'une partie d'un récepteur muni d'un dispositif de synchronisation selon l'invention.
Figure 5 : une suite d'échantillons formant une partie d'une trame du signal OFDM.

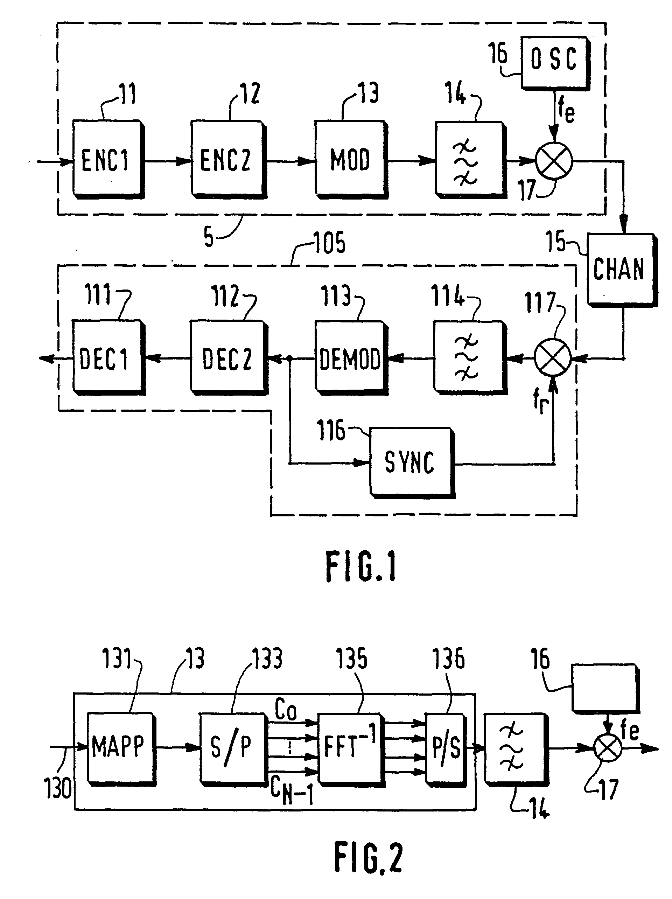

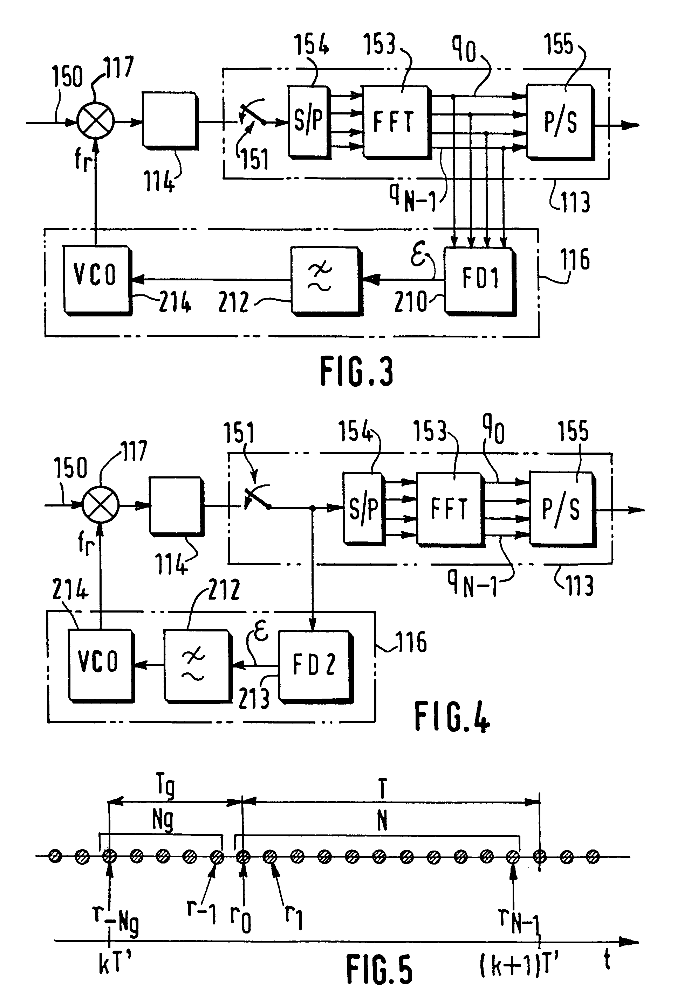

La figure 1 représente un schéma-bloc d'un système de transmission numérique formé d'un émetteur 5 et d'un récepteur 105 qui communiquent à travers un canal CHAN 15. Il peut s'agir de liaisons hertziennes, de liaisons par satellite ou de liaisons par câbles. L'émetteur 5 comprend en série :

- un codeur de source ENC1 11 (qui peut ne pas exister),
- un codeur de canal ENC2 12,
- un modulateur OFDM MOD 13,
- un filtre d'émission 14,
- un oscillateur OSC 16 qui génère une porteuse $f_e$,
- un mélangeur 17 mélangeant le signal de sortie du filtre d'émission avec la porteuse $f_e$.

Pour une application de transmission de signaux TV numérisés avec une qualité meilleure que celle obtenue par la norme PAL, le codeur de source 11 délivre un débit binaire de l'ordre de 8 Mbits/s. Ces échantillons sont codés par le codeur de canal 12 pour les rendre non vulnérables aux imperfections du canal. Le modulateur 13 adapte ensuite les échantillons numériques au canal de transmission par exemple un canal de transmission par voie terrestre (exemple : diffusion sur une bande de 8 MHz).

Le récepteur 105 effectue à la réception des opérations inverses de celles effectuées à l'émission. Pour cela, il comprend (à la sortie du canal 15) :

- un mélangeur 117 qui multiplie le signal reçu par une porteuse locale régénérée $f_r$.
- un filtre de réception 114,
- un démodulateur OFDM DEMOD 113,
- un décodeur de canal DEC2 112,
- un décodeur de source DEC1 111 (qui peut ne pas exister),
- un dispositif SYNC de synchronisation de porteuse 116 qui génère la porteuse régénérée $f_r$.

Pour que la description soit claire, les mécanismes connus mis en oeuvre à l'émission sont tout d'abord présentés.

A l'émission, les porteuses émises sont modulées par les signaux numériques à transmettre selon les principes connus. La figure 2 représente le schéma du modulateur 13 qui fournit des données au filtre 14 puis au mélangeur 17 connecté à l'oscillateur 16. Les données d'entrée numérisées présentes sur l'entrée 130 sont introduites dans un organe 131 d'affectation binaire MAPP qui répartit les données d'entrée en symboles codés d'une constellation. Les symboles codés qui apparaissent en série en sortie de l'organe 131 subissent une conversion série/parallèle S/P 133 pour donner lieu à N symboles complexes $C_k$ ($0 \leq k < N-1$). Un symbole complexe $C_k$ est utilisé pour moduler une porteuse de fréquence $f_k$ avec $f_k = k/T$ (en raison de l'orthogonalité) où T est la durée d'un symbole OFDM et k l'indice de la porteuse. La combinaison de toutes les porteuses $f_k$, modulées en vue de générer le signal OFDM global, revient à effectuer une transformée de Fourier inverse dans un dispositif 135. Dans le cas particulier où N est une puissance de 2, la transformée de Fourier inverse peut être effectuée en utilisant l'algorithme de transformée rapide inverse ($FFT^{-1}$) comme indiqué sur la figure 2. Ceci permet de réduire la complexité du circuit. Les N signaux issus du dispositif 135 subissent une conversion parallèle-série 136. Après filtrage 14, le signal issu du filtre 14 est mélangé avec la fréquence porteuse $f_e$ de l'oscillateur 16. Ces techniques de modulation sont bien connues de l'homme du métier.

La figure 3 représente un démodulateur 113 qui opère, à la réception, les opérations inverses de celles mises en oeuvre à l'émission. Pour cela, il comprend un échantillonneur 151 qui opère à une cadence N/T où N est le nombre total de porteuses du canal OFDM et 1/T la fréquence symbole. Les échantillons ainsi prélevés subissent une conversion série-parallèle 154 puis sont introduits dans un dispositif 153 qui effectue une transformée de Fourier discrète (de préférence rapide FFT) pour délivrer en parallèle $q_k$ échantillons ($0 \leq k \leq$ N-1) qui subissent une transformation parallèle-série dans un dispositif 155. Les échantillons reçus sur l'entrée 150 arrivent sur un mélangeur 117 pour être mélangés avec une porteuse régénérée $f_r$ issue du dispositif de synchronisation de fréquence 116 comme cela est indiqué sur la figure 1.

La figure 3 représente en outre un schéma d'un dispositif 116 de synchronisation connu. On connecte sur le démodulateur 113, un détecteur de fréquences 210 qui délivre un signal de correction ε. Celui-ci, après filtrage par un filtre 212, corrige un oscillateur local 214, commandé en tension, qui délivre la porteuse locale régénérée $f_r$ qui est introduite dans le mélangeur 117. Ainsi tout écart de fréquence entre l'oscillateur local 214 et la fréquence de l'oscillateur 16 de l'émetteur donne lieu à un signal de correction ε plus ou moins important selon la valeur de cet écart. Selon les modulations mises en oeuvre, il peut être nécessaire de compléter la synchronisation de fréquences par une synchronisation de phase.

Le dispositif de synchronisation de la figure 3 qui prélève les données en sortie de la transformée de Fourier, donc dans le domaine fréquentiel, est celui du document EP 580 216 cité.

Comme ce document, l'invention concerne essentiellement la synchronisation de porteuse à la réception pour que le récepteur opère avec une fréquence de porteuse égale à celle utilisée par l'émetteur.

Selon l'invention (figure 4), le dispositif de synchronisation de fréquence 116 effectue la synchronisation sur des échantillons prélevés avant la démodulation c'est-à-dire dans le domaine temporel. Les échantillons arrivent en série dans un détecteur de fréquence FD2, 213 qui délivre le signal de correction ε, lequel, après filtrage par le filtre 212, corrige l'oscillateur local 214.

Le détecteur de fréquence FD2 tire profit du format des données tel qu'il apparaît dans un signal OFDM connu. Une trame OFDM est généralement constituée d'une suite de blocs spéciaux (par exemple 5 blocs) pour la synchronisation de trame ou pour tester le canal et d'une suite de blocs de données (par exemple 100 blocs) contenant les données proprement dites. Un bloc de données renferme une redondance d'informations, due à l'intervalle de garde, pour s'affranchir des phénomènes de propagation multitrajet. La redondance consiste, à l'émission, à recopier en début de bloc une partie des données de fin de bloc. On dispose ainsi dans un bloc des mêmes données présentes deux fois.

Ceci est représenté sur la figure 5 où apparaît la partie utile du bloc de données au cours d'une durée T, la partie utile étant précédée, au cours d'un intervalle de garde de durée $T_g$, de données recopiées à partir de la partie utile.

Ainsi sur la figure 5, l'échantillon $r_{N-1}$ de la partie utile est recopié comme échantillon $r_{-1}$ dans l'intervalle de garde et ainsi de suite de proche en proche.

A la réception on doit donc retrouver un échantillon $r_{-1}$ identique à l'échantillon $r_{N-1}$. On détermine le signal de correction ε, en mesurant la différence entre les deux échantillons reçus. Le détecteur de fréquence calcule le signal de correction tel que :

$$\varepsilon_k = \frac{1}{L} \sum_{i=1}^{L} Im \left\{ r_{N-i} \; r_{-i}^* \right\}$$

où :

- Im signifie : "la partie imaginaire de"

- $r_{-i}^*$ est l'échantillon conjugué de l'échantillon $r_{-i}$

- l'opération effectuée étant le produit des deux échantillons.

Le signal de correction peut être déterminé sur un seul couple

$$\left\{ r_{N-i} \; r_{-i}^* \right\},$$

soit L = 1, ou constituer une moyenne calculée sur plusieurs couples

$$\left\{ r_{N-i} \; r_{-i}^* \right\}.$$

Il peut s'agir d'un ou plusieurs couples

$$\left\{ r_{N-i}^* \; r_{-i} \right\}.$$

Le détecteur de fréquence FD2 comprend alors des moyens de multiplication, par exemple un multiplieur, qui multiplient deux à deux les échantillons précités, c'est-à-dire un des échantillons et le conjugué de l'autre échantillon. Il calcule, si nécessaire, la moyenne sur plusieurs couples. La sortie délivre la partie imaginaire du résultat obtenu.

La synchronisation de porteuse peut ainsi être réalisée sur chaque bloc de données contenu dans une trame, par exemple 100 fois dans l'exemple cité, et non pas une seule fois par trame lorsque la synchronisation est effectuée à l'aide du bloc spécial de synchronisation que contient chaque trame.

Les avantages de ce détecteur de fréquence sont :

- sa grande simplicité : même dans le cas d'un seul couple, les performances obtenues sont meilleures que celles obtenues par les solutions antérieures,

- sa grande vitesse d'acquisition de synchronisation : le temps d'acquisition décroît en fonction de L,
- ses très bonnes propriétés d'estimation de fréquence : dans le cas de canaux multitrajet, l'estimation de fréquence est parfaitement non biaisée.

L'invention a été décrite en prenant comme exemple des signaux disposant d'un format OFDM. Elle s'applique néanmoins à d'autres signaux comportant des données redondantes.

## Revendications

1. Système de transmission de données comprenant un émetteur (5) et un récepteur (105) reliés entre eux, l'émetteur (5) comportant des moyens (135) pour convertir des premiers signaux du domaine fréquentiel en des seconds signaux du domaine temporel, les seconds signaux à émettre comportant des données utiles et des données redondantes dupliquant des données utiles, le récepteur (105) comprenant des moyens (153) pour convertir inversement, du domaine temporel vers le domaine fréquentiel, les seconds signaux en provenance de l'émetteur, le récepteur comprenant, en outre, un dispositif de synchronisation (116) muni d'un oscillateur (214) pour générer une porteuse locale ($f_r$), le dispositif de synchronisation (116) délivrant un signal de correction *(ε)* pour synchroniser la porteuse locale ($f_r$) **caractérisé en ce que** le dispositif de synchronisation (116) comporte des moyens de détection de fréquence (213) pour mesurer une différence entre au moins une donnée utile et la donnée redondante correspondante et pour en déduire ledit signal de correction *(ε)*.

2. Système selon la revendication 1, dans lequel les moyens de détection de fréquence (213) comportent des moyens de multiplication pour effectuer un produit entre une donnée utile et la partie imaginaire de la donnée redondante correspondante ou inversement.

3. Système selon la revendication 1 ou 2, **caractérisé en ce que** le signal de correction est constitué par une composante imaginaire d'un signal résultant soit d'une multiplication de la donnée utile par le conjugué de la donnée redondante, soit d'une multiplication du conjugué de la donnée utile par la donnée redondante correspondante, soit d'une moyenne calculée sur plusieurs couples de données utiles et redondantes.

4. Système selon une des revendications 1 à 3, **caractérisé en ce que** l'émetteur (5) fournit des signaux au format dit à répartition multiplexée de fréquences orthogonales et que le récepteur (105) traite lesdits signaux en provenance de l'émetteur.

5. Récepteur pour recevoir un signal d'émission comportant des données utiles et des données redondantes dupliquant les données utiles, le récepteur comprenant des moyens pour convertir le signal d'émission du domaine temporel vers le domaine fréquentiel, le récepteur comprenant en outre un dispositif de synchronisation (116) muni d'un oscillateur (214) pour générer une porteuse locale ($f_r$), le dispositif de synchronisation (116) délivrant un signal de correction *(ε)* pour synchroniser la porteuse locale ($f_r$) **caractérisé en ce que** le dispositif de synchronisation (116) comporte des moyens de détection de fréquence (213) pour mesurer une différence entre au moins une donnée utile et la donnée redondante correspondante et pour en déduire ledit signal de correction *(ε)*.

6. Récepteur selon la revendication 5, dans lequel les moyens de détection de fréquence (213) comportent des moyens de multiplication pour effectuer un produit entre une donnée utile et la partie imaginaire de la donnée redondante correspondante ou inversement.

7. Récepteur selon l'une des revendications 5 ou 6, **caractérisé en ce que** le signal de correction est constitué par une composante imaginaire d'un signal résultant soit d'une multiplication de la donnée utile par le conjugué de la donnée redondante, soit d'une multiplication du conjugué de la donnée utile par la donnée redondante correspondante, soit d'une moyenne calculée sur plusieurs couples de données utiles et redondantes.

8. Récepteur selon l'une des revendications 5 à 7, **caractérisé en ce que** le signal d'émission reçu est au format dit à répartition multiplexée de fréquences orthogonales.

## Patentansprüche

1. System zur Datenübertragung mit einem Sender (5) und einem Empfänger (105), die miteinander verbunden sind, wobei der Sender (5) Verfahren (135) zum Umwandeln der ersten Signale des Frequenzbereichs und der zweiten Signale des Zeitbereichs aufweist, die zweiten zu sendenden Signale Nutzdaten und Redundanzdaten enthalten, die die Nutzdaten verdoppeln, der Empfänger (105) Verfahren (153) zum umgekehrten Umwandeln, vom Zeitbereich zum Frequenzbereich, der zweiten, vom Sender kommenden Signale enthält, der Empfänger zudem eine Synchronisierungsanordnung (116) enthält, die mit einem Oszillator (214) versehen ist, um einen lokalen Träger ($f_r$) zu erzeugen, wobei die Synchronisierungsanordnung (116) ein Korrektursignal ($\varepsilon$) zur Synchronisierung des lokalen Trägers ($f_r$) abgibt, **dadurch gekennzeichnet, dass** die Synchronisierungsanordnung (116) Frequenzdetektionsverfahren (213) enthält, um einen Unterschied zwischen mindestens einem Nutzdatensatz und dem entsprechenden Redundanzdatensatz zu messen, und um davon das besagte Korrektursignal ($\varepsilon$) abzuleiten.

2. System nach Anspruch 1, in dem die Frequenzdetektionsverfahren (213) Multiplikationsverfahren enthalten, um ein Produkt zwischen einem Nutzdatensatz und dem gedachten Teil des entsprechenden Redundanzdatensatz zu erhalten oder umgekehrt.

3. System nach Anspruch 1 oder 2, **dadurch gekennzeichnet, dass** das Korrektursignal aus einer gedachten Signalkomponente gebildet wird, die entweder aus einer Multiplikation des Nutzdatensatzes mit dem entsprechenden Redundanzdatensatz, oder aus der Multiplikation des zugeordneten Nutzdatensatzes mit dem entsprechenden Redundanzdatensatz, oder aus einem über mehrere Nutz- und Redundanz-Datensatzpaare berechneten Durchschnitt hervorgeht.

4. System nach einem der Ansprüche 1 bis 3, **dadurch gekennzeichnet, dass** der Sender (5) Signale in dem sogenannten Format der Orthogonalfrequenz-Multiplexaufteilung liefert, und der Empfänger (105) die besagten, vom Sender kommenden Signale verarbeitet.

5. Empfänger für den Erhalt eines Sendesignals mit Nutzdaten und Redundanzdaten, die die Nutzdaten verdoppeln, wobei der Empfänger Verfahren zum Umwandeln des Sendesignals vom Zeitbereich zum Frequenzbereich enthält, der Empfänger zudem eine Synchronisierungsanordnung (116) enthält, die mit einem Oszillator (214) versehen ist, um einen lokalen Träger ($f_r$) zu erzeugen, die Synchronisierungsanordnung (116) ein Korrektursignal ($\varepsilon$) zur Synchronisierung des lokalen Trägers ($f_r$) abgibt, **dadurch gekennzeichnet, dass** die Synchronisierungsanordnung (116) Frequenzdetektionsverfahren (213) enthält, um einen Unterschied zwischen mindestens einem Nutzdatensatz und dem entsprechenden Redundanzdatensatz zu messen, und um davon das besagte Korrektursignal ($\varepsilon$) abzuleiten.

6. Empfänger nach Anspruch 5, in dem die Frequenzdetektionsverfahren (213) Multiplikationsverfahren enthalten, um ein Produkt zwischen einem Nutzdatensatz und dem gedachten Teil des entsprechenden Redundanzdatensatz zu erhalten oder umgekehrt.

7. Empfänger nach einem der Ansprüche 5 oder 6, **dadurch gekennzeichnet, dass** das Korrektursignal aus einer gedachten Signalkomponente gebildet wird, die entweder aus einer Multiplikation des Nutzdatensatzes mit dem entsprechenden Redundanzdatensatz, oder aus der Multiplikation des zugeordneten Nutzdatensatzes mit dem entsprechenden Redundanzdatensatz, oder aus einem über mehrere Nutz- und Redundanz-Datensatzpaare berechneten Durchschnitt hervorgeht.

8. Empfänger nach einem der Ansprüche 5 bis 7, **dadurch gekennzeichnet, dass** das gesendete Signal, das empfangen wird, das sogenannte Format der Orthogonalfrequenz-Multiplexaufteilung aufweist.

## Claims

1. A data transmission system comprising an interconnected transmitter (5) and receiver (105) the transmitter (5) including means (135) for converting first frequency-domain signals into second time-domain signals, the second transmission signals being formed by useful data and redundant data which duplicate useful data, the receiver (105) comprising means (153) for reconverting from the time domain to the frequency domain the second signals coming from the transmitter, the receiver furthermore comprising a synchronization circuit (116) with an oscillator (214) for generating a local carrier ($f_r$), the synchronization circuit (116) delivering a correction signal ($\varepsilon$) for the synchronization of the local carrier ($f_r$), **characterized in that** the synchronization circuit (116) comprises frequency detection means (213) for measuring a difference between at least a useful data and the corresponding redundant data and for deriving said correction signal ($\varepsilon$) therefrom.

2. A system as claimed in claim 1, in which the frequency detection means (213) comprise multiplying means for effecting a product between a useful data and the imaginary part of the corresponding redundant data or vice-versa.

3. A system as claimed in claim 1 or 2, **characterized in that** the correction signal is formed by an imaginary component of a signal that results either from a multiplication of the useful data by the conjugate of the redundant data, or from a multiplication of the conjugate of the useful data by the corresponding redundant data, or by a mean value calculated from various pairs of useful and redundant data.

4. A system as claimed in one of the claims 1 to 3, **characterized in that** the transmitter (5) produces signals in the format called orthogonal frequency-division multiplexing format and **in that** the receiver (105) processes said signals coming from the transmitter.

5. A receiver for receiving a transmission signal which contains useful data and redundant data which duplicate the useful data, the receiver comprising means for converting the transmission signal from the time domain to the frequency domain, the receiver furthermore comprising a synchronization circuit (116) with an oscillator (214) for generating a local carrier ($f_r$), while the synchronization circuit (116) delivers a correction signal ($\varepsilon$) for synchronizing the local carrier ($f_r$), **characterized in that** the synchronization circuit (116) comprises frequency detection means (213) for measuring a difference between at least a useful data and the corresponding redundant data and for deriving said correction signal ($\varepsilon$) therefrom.

6. A receiver as claimed in claim 5, in which the frequency detection means (213) comprise multiplying means for effecting a product between a useful data and the imaginary part of the corresponding redundant data or vice-versa.

7. A receiver as claimed in one of the claims 5 or 6, **characterized in that** the correction signal is formed by an imaginary component of a signal that results either from a multiplication of the useful data by the conjugate of the redundant data, or from a multiplication of the conjugate of the useful data by the corresponding redundant data, or by a mean value calculated from various pairs of useful and redundant data.

8. A receiver as claimed in one of the claims 5 to 7, **characterized in that** the received transmission signal has the format called orthogonal frequency-division multiplexing format.

FIG.1

FIG.2

FIG.3

FIG.4

FIG.5